Europäisches Patentamt

European Patent Office

Office européen des brevets

(11) Veröffentlichungsnummer : **0 170 990**
**B1**

# (12) EUROPÄISCHE PATENTSCHRIFT

(45) Veröffentlichungstag der Patentschrift :
28.09.88

(21) Anmeldenummer : 85109299.9

(22) Anmeldetag : 24.07.85

(51) Int. Cl.⁴ : **F 16 K 31/00**, F 15 B 15/20,
B 60 H   1/00, H 01 L 41/08

(54) Steuervorrichtung zur Luftklappenbetätigung.

(30) Priorität : 06.08.84 DE 3428969

(43) Veröffentlichungstag der Anmeldung :
12.02.86 Patentblatt 86/07

(45) Bekanntmachung des Hinweises auf die Patenterteilung : 28.09.88 Patentblatt 88/39

(84) Benannte Vertragsstaaten :
AT DE FR GB IT

(56) Entgegenhaltungen :
EP-A- 0 109 239
DE-A- 2 226 365
DE-A- 3 320 907
FR-A- 2 460 406
FR-A- 2 496 187
US-A- 3 152 612
US-A- 4 037 651
US-A- 4 134 542
US-A- 4 142 553
US-A- 4 147 205
US-A- 4 340 083

(73) Patentinhaber : Siemens Aktiengesellschaft Berlin
und München
Wittelsbacherplatz 2
D-8000 München 2 (DE)

(72) Erfinder : Hildebrand, Reinhard
Hauptstrasse 11
D-8627 Redwitz (DE)
Erfinder : Kusuma, Djuanarto-Adi
Am Sportplatz 20
D-8635 Dörfles-Esbach (DE)

## Beschreibung

Die Erfindung betrifft eine Steuervorrichtung nach den Merkmalen des Oberbegriffes des Patentanspruches.

Bislang wird zur Luftklappenbetätigung für Heizungs- und Klimaanlagen in Kraftfahrzeugen eine Unterdruck-Steuervorrichtung, die mittels eines mechanischen oder elektromagnetischen Vakuumschalters betätigt wird, verwendet. Der Vakuumschalter ist außerhalb der Unterdrucksteuervorrichtung angebracht.

Aus der FR-A-2 460 406 ist ein Stellelement mit einer Membrankammer mit durch Unterdruck verschiebbaren, federbelasteten Kolben bekannt. Unterdrucksteuervorrichtung und Schalter weisen eine Integration auf und das Belüftungsventil ist Bestandteil eines Magnetventils.

In der DE-A-3 320 907 (= EP-A-0 128 447) ist eine Steuervorrichtung insbesondere für Heizungs- und Klimaanlagen in Kraftfahrzeugen aus einem einteiligen oder zweiteiligen Kunststoffgehäuse mit einem in einem Kanal angeordneten piezoelektrischen Biegewandler als Schaltelement, der beidseitig mit einem Dichtungselement versehen ist und über Kontaktstifte, die im Kontaktstiftgehäuse angeordnet sind, elektrisch kontaktiert ist, beschrieben. Bei dieser Vorrichtung geht die Leitung vom Vakuumspeicher erst zur Steuervorrichtung und dann erst von der Steuervorrichtung zur Unterdruckdose (= Membranraum).

Der Erfindung liegt die Aufgabe zugrunde, zur Luftklappenbetätigung eine Steuervorrichtung zu schaffen, die in die Unterdruckvorrichtung integriert ist und ein piezoelektrisches Schaltelement enthält. Es soll mittels des piezoelektrischen Elements und dem Unterdruck eine direkte Steuerung möglich sein. Ferner soll eine einwandfreie Abdichtung der Durchgangsbohrung zur Umgebung gewährleistet sein.

Diese Aufgabe wird bei einer Steuervorrichtung der eingangs genannten Art nach der Erfindung durch die Merkmale des Kennzeichens des Patentanspruches gelöst.

Das erfindungsgemäß in einem Unterdruck-Steuervorrichtungs-Gehäuse angeordnete Piezoelement unterbricht bei angelegter Spannung (+) oder (—) die Verbindung zwischen der Unterdruckleitung und den Bohrungen in denen Atmosphärendruck herrscht. Bei der angelegten Spannung (—) oder (+) liegt das Piezoelement so, daß die Durchgangsbohrung zur Atmosphäre abgedichtet wird. Damit ist die Verbindung zwischen der Unterdruckleitung über die Durchgangsbohrung zum Membranraum hergestellt. Durch die Saugkraft, die in dem Vakuumspeicherbehälter stets vorhanden ist, setzt sich die Gummimembran in Richtung des Biegewandlers in Bewegung und der Zapfen drückt den Biegewandler so weit, daß eine einwandfreie Abdichtung der Durchgangsbohrung zum atmosphärischen Druck gewährleistet ist. Durch die Bewegung der Gummimembran bewegt sich auch der Stößel und damit die Luftklappe. Außerdem übt der Stößel auf das Piezoelement zusätzlich eine äußere Kraft aus.

Zur Abdichtung sind die einzelnen Formteile des Kunststoffgehäuses, nachdem das piezoelektrische Element in die vorgesehene Aussparung eingelegt und zentriert worden ist, verklebt und verschweißt. Der den Zapfen tragende Stößel, an welchen die Luftklappe angebracht ist, sitzt in einer Aussparung des Formteiles mittels einer Gummimembran die zugleich als Zwischenlage für die ineinandergreifenden Gehäuseteile und als Dichtung fungiert.

Die elektrische Kontaktierung ist gegen Luftfeuchtigkeit und Wasser geschützt durch Vergießen der die elektrische Leitungen führenden Kammer mit einem Gießharz. Epoxidharze haben sich als besonders geeignet erwiesen. Zur Vermeidung von Verschmutzung der Durchgangsbohrung zur Atmosphäre bzw. des piezoelektrischen Elements dient ein Polyurethan-Schaumstoffstopfen.

Mit Vorrichtungen gemäß der Erfindung, die eine direkte Verbindung vom Vakuumspeicher zur Unterdruckdose (= Membranraum) aufweisen, spart man eine Leitung.

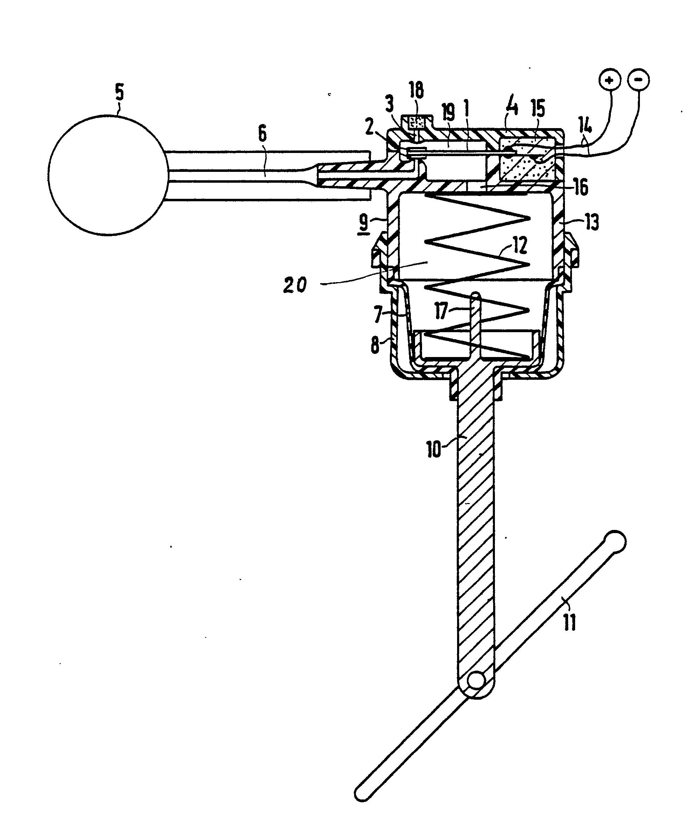

Zur noch besseren Veranschaulichung der Erfindung dient die Zeichnung.

Aus der schematischen Darstellung einer erfindungsgemäßen Vorrichtung ist ersichtlich, daß der Steuerschalter in die Unterdruck-Steuervorrichtung integriert ist. In das Kunststofformteil 9 aus den einzelnen Formteilen 4 und 13 mit den Kammern 15 und 19, das mit dem Kunststofformteil 8 einen festen Verbund aufweist, ist eine Gummimembran 7 eingelegt. Sie dient zugleich als Halterung für den Stößel 10 mit dem Zapfen 17. An den Stößel ist die Luftklappe 11 angeschlossen. Die Kammer 15 ist mit Gießharz vergossen. In die Kammer 19 mündet die Unterdruckleitung 6 vom Vakuumspeicher 5. Der in diese Kammer 19 hineinragende Biegewandler 1 mit den elastomeren Dichtungen 2 ist mit den elektrischen Leitungen 14 verbunden. Mittels des Biegewandlers 1 wird bei Anlegen von Strom die Verbindung zwischen der Unterdruckleitung 6 und dem Membranraum 20 über die Durchgangsbohrung 16 und zwischen der Durchgangsbohrung 3 und dem Membranraum 20 über die Durchgangsbohrung 16 geöffnet bzw. geschlossen. Zur Vermeidung von Verschmutzung ist der Bohrung 3 ein Polster 18 aus Polyurethanschaum vorgelagert. 12 ist eine Spiralfeder zur Rückstellung der Luftklappe.

## Patentanspruch

Steuervorrichtung mittels Unterdruck zur Luftklappenbetätigung insbesondere für Heizungs- und Klimaanlagen in Kraftfahrzeugen, enthaltend einen Membranraum (20) mit einer Gummimembran (7), die mit einem an die Luftklappe angeschlossenen Stößel (10) und mit einer Rückstellfe-

der (12) zusammenwirkt, Kunststofformteile (8, 9), die ein Gehäuse bilden, das an einer Unterdruckleitung (6) angeschlossen ist und eine Bohrung (3) zur Atmosphäre aufweist, und einen piezoelektrischer Biegewandler (1), der beidseitig mit einer elastomeren Dichtung (2) versehen und mit einem Steuerschalter (14, 15) verbunden ist, wobei der piezoelektrische Biegewandler (1) die Mündung der Unterdruckleitung (6) oder die Bohrung (3) zur Atmosphäre schließt bzw. öffnet, dadurch gekennzeichnet, daß der piezoelektrischer Biegewandler (1) mit dem Steuerschalter (14, 15) und dem Membranraum (20) im Gehäuse (8, 9) integriert ist, und daß der Stößel (10) mit einem Zapfen (17) versehen ist, der bei Luftklappenbetätigung eine zusätzliche Kraft auf den Biegewandler (1) ausübt, derart, daß eine einwandfreie Abdichtung der Bohrung (3) zur Atmosphäre gewährleistet ist.

## Claim

Control device operating by means of low pressure for actuating an air damper, more particularly for heating and air-conditioning installations in motor vehicles, containing a diaphragm chamber (20) with a rubber diaphragm (7) which cooperates with a plunger (10) connected to the air damper and with a return spring (12), plastic moulded portions (8, 9) which form a housing which is connected to a low pressure line (6) and has a bore hole (3) to the atmosphere, and a piezoelectric flexible transducer (1) which is provided, on both sides, with an elastomer seal (2) and is connected with a control switch (14, 15), the piezoelectric flexible transducer (1) closing or opening the mouth of the low pressure line (6) or the bore hole (3) to the atmosphere, characterised in that the piezoelectric flexible transducer (1) is integrated with the control switch (14, 15) and the diaphragm chamber (20) in the housing (8, 9) and in that the plunger (10) is provided with a peg (17) which, upon actuation of the air damper, exerts additional force on the flexible transducer (1) in such a way that an effective seal of the bore hole (3) to the atmosphere is guaranteed.

## Revendication

Dispositif de commande à dépression pour actionner un volet d'aération, notamment destiné à des installations de chauffage et de climatisation dans des voitures automobiles, comprenant une chambre de membrane (20) avec une membrane en caoutchouc (7), qui coagit avec un poussoir (10) relié au volet d'aération et avec un ressort de rappel (12), des pièces venues de moulage en matière plastique (8, 9) qui constituent un boîtier qui est raccordé à une conduite à dépression (6) et qui présente un perçage (3) menant à l'atmosphère, et un transducteur de flexion (1) piézoélectrique qui est pourvu des deux côtés d'un moyen d'étanchéité en un élastomère (2) et qui est relié à un commutateur de commande (14, 15), le transducteur piézoélectrique de flexion (1) ouvrant ou fermant l'embouchure de la conduite à dépression (6) ou le perçage (3) menant à l'atmosphère, caractérisé en ce que le transducteur piézoélectrique de flexion (1) est intégré, avec le commutateur de commande (14, 15) et la chambre de membrane (20) dans le boîtier (8, 9), et que le poussoir (10) est pourvu d'un appendice (17) qui, dans le cas de l'actionnement du volet d'aération, exerce une force supplémentaire sur le transducteur de flexion (1) de manière à garantir une parfaite étanchéité du perçage (3) menant à l'atmosphère.